# FASCICULE DE BREVET EUROPEEN

(11) **EP 4 241 192 B1**
(45) Date de publication et mention de la délivrance du brevet: **23.09.2026**
(21) Numéro de dépôt: 21806168.7
(22) Date de dépôt: 02.11.2021
(51) Int. Cl.: G06F 21/86, G06F 21/83, G06F 3/02, G07F 7/10, G07F 19/00

(54) **MODULE DE SECURITE, TERMINAL DE PAIEMENT ELECTRONIQUE, PROCEDE DE DETECTION CORRESPONDANT**
SICHERHEITSMODUL, ELEKTRONISCHES ZAHLUNGSENDGERÄT, ENTSPRECHENDES DETEKTIONSVERFAHREN
SECURITY MODULE, ELECTRONIC PAYMENT TERMINAL, CORRESPONDING DETECTION METHOD

(30) Priorité: 04.11.2020 FR 2011312
(43) Date de publication de la demande: 13.09.2023
(73) Titulaire: Banks and Acquirers International Holding, 75015 Paris (FR)
(72) Inventeur: GRANDDIDIER, Yann, 07610 Lemps (FR); ANDRE, Jérôme, 26800 Montoison (FR)
(74) Mandataire: Germain Maureau
(86) Numéro de dépôt international: PCT/EP2021/080403
(87) Numéro de publication internationale: WO 2022/096463

(56) Documents cités:
- US-A1- 2013 058 057
- US-A1- 2016 224 807

## Description

### Domaine de l'invention

Le domaine de l'invention est celui des dispositifs électroniques. L'invention se rapporte plus particulièrement à la sécurisation de tels dispositifs électroniques, par exemple par détection d'ouverture ou d'intrusion.

L'invention a ainsi de nombreuses applications, notamment, mais non exclusivement, dans les domaines des terminaux de paiement électronique, les lecteurs de cartes de paiement, etc., et plus particulièrement pour la détection de tentative d'intrusion dans de tels dispositifs électroniques.

### Art antérieur et ses inconvénients

On s'attache donc plus particulièrement dans la suite de ce document à décrire une problématique existante dans le domaine des terminaux de paiement électronique à laquelle ont été confrontés les inventeurs de la présente demande de brevet.

Les terminaux de paiements traitant des données sensibles, il est nécessaire de les protéger contre des tentatives de fraudes. Ainsi, des mesures de protections existent, matérielles et/ou logicielles. Parmi les mesures de protection matérielles, on trouve notamment les techniques destinées à détecter l'ouverture du capot du terminal de paiement électronique, via par exemple la mise en œuvre de « fausses touches » en élastomère associées à des « pads carbone » ou des « dômes métal », qui permettent de vérifier que le terminal ne subit pas une tentative de démontage.

En effet, un terminal de paiement comprend, de manière classique, une demi-coque supérieure et une demi-coque inférieure. La demi-coque supérieure comprend des ouvertures qui sont utilisées par exemple pour laisser dépasser les touches du clavier et l'écran d'affichage du terminal. Au niveau du clavier, les dispositifs « fausses touches » sont utilisés pour vérifier que la demi-coque supérieure du terminal est bien emboitée d'une part dans la demi-coque inférieure et d'autre part que les fausses touches reposent sur au moins une carte de circuit imprimé (carte mère) présente dans le terminal de paiement. Ceci permet de s'assurer que le terminal de paiement n'est pas ouvert et donc qu'il n'y a pas de tentative d'introduction d'un dispositif espion au niveau du clavier du terminal de paiement par exemple. Les fausses touches sont pressées par exemple par l'intermédiaire d'une extension en plastique (pleine ou non) s'étendant de l'intérieur de la demi-coque supérieure pour venir prendre place sur la fausse touche de la carte de circuit imprimé (carte mère). Cette solution de l'art antérieur est généralement assez efficace. Néanmoins, cette solution est assez ancienne et ne convient pas nécessairement aux nouveaux types de terminaux de paiement. De plus, ces « fausses touches » restent vulnérables à des attaques qui permettent de les « désactiver » de manière à empêcher la détection d'une intrusion. Ainsi, il est aisément possible, pour un attaquant, de coller la fausse touche ainsi que le plastique qui la maintient puis de découper le capot sur lequel elle est en appui. Un attaquant se retrouve donc avec un sous-ensemble constitué du circuit imprimé (par exemple un PCB ou « Printed circuit Board » en anglais), de la fausse touche et d'un bout de capot associé, facile à manipuler. La protection est donc relativement facile à contourner, même si elle fait perdre du temps à l'attaquant et augmente donc les risques qu'il doit prendre. De même, un type d'attaque connue consiste par exemple à injecter de l'encre conductrice sous la « fausse touche », afin de fermer durablement le circuit de sécurité même lorsque la « fausse touche » n'est plus contrainte par la fermeture du boitier du terminal de paiement électronique. US2013/058057 fait partie de l'art antérieur.

Il existe donc un besoin pour une technique de détection d'intrusion et d'ouverture du boitier d'un dispositif électronique qui permette une sécurisation fiable, simple et peu coûteuse à mettre en œuvre.

### Exposé de l'invention

La technique proposée permet de résoudre au moins certains inconvénients de l'art antérieur.

La présente technique propose un module de sécurité d'un terminal de paiement électronique comprenant un boitier formé par au moins un capot supérieur et un capot inférieur, le module de sécurité comprenant au moins un premier et un deuxième circuits imprimés présentant chacun une face intérieure, les faces intérieures étant situées en regard l'une de l'autre et sur lesquelles est implantée une pluralité de composants électroniques à sécuriser, et un circuit imprimé flexible s'étendant du premier circuit imprimé au deuxième circuit imprimé sur au moins une partie de leur périmètre et formant, avec les premier et deuxième circuits imprimés, une enceinte sécurisée pour la pluralité de composants électroniques. Selon la présente technique, le module de sécurité comprend au moins un élément de sécurité s'étendant du premier circuit imprimé ou du deuxième circuit imprimé, sur lequel il est relié à au moins un circuit de détection d'ouverture du boitier, vers le deuxième circuit imprimé, respectivement le premier circuit imprimé, en regard d'une lumière traversant le deuxième circuit imprimé, respectivement le premier circuit imprimé, via laquelle ledit au moins un élément de sécurité entre en contact avec ledit au moins un capot supérieur ou ledit au moins un capot inférieur lorsque le boitier est fermé.

Ainsi, la présente technique propose une solution nouvelle et inventive pour améliorer la détection d'ouverture du boitier d'un terminal de paiement électronique tout en facilitant la conception, la fabrication et l'assemblage des éléments permettant cette détection. Pour ce faire, au moins un élément de sécurité permettant de détecter l'ouverture du boitier d'un terminal de paiement électronique est intégré à une enceinte sécurisée composée de deux circuits imprimés positionnés face à face et un circuit imprimé flexible joignant les deux circuits imprimés. Cet élément de sécurité s'étend ainsi d'un des circuits imprimés vers l'autre, à travers duquel il débouche et se trouve ainsi en contact (directement ou via un actuateur ou un élément de liaison) avec l'un ou l'autre des capots du boitier du terminal de paiement électronique lorsqu'il est fermé.

Ainsi, l'intégration de l'élément de sécurité au sein de l'enceinte sécurisé renforce la fiabilité de cet élément de sécurité en renforçant son invulnérabilité aux attaques extérieures.

Selon un aspect particulier, le module de sécurité comprend deux éléments de sécurité respectivement pour détecter l'ouverture du capot supérieur et l'ouverture du capot inférieur, les deux éléments de sécurité étant noté élément de sécurité supérieur et élément de sécurité inférieur, l'élément de sécurité supérieur s'étendant du premier circuit imprimé, sur lequel il est relié à au moins un circuit de détection d'ouverture du boitier, vers le deuxième circuit imprimé en regard d'une lumière traversant le deuxième circuit imprimé via laquelle l'élément de sécurité supérieur entre en contact avec ledit au moins un capot supérieur lorsque le boitier est fermé et l'élément de sécurité inférieur s'étendant du deuxième circuit imprimé, sur lequel il est relié à au moins un circuit de détection d'ouverture du boitier, vers le premier circuit imprimé en regard d'une lumière traversant le premier circuit imprimé via laquelle l'élément de sécurité inférieur entre en contact avec ledit au moins un capot inférieur lorsque le boitier est fermé.

Ainsi, selon ce mode de réalisation, il est prévu deux éléments de sécurité respectivement pour détecter l'ouverture du capot supérieur et du capot inférieur. Pour ce faire, chacun des éléments de sécurité est respectivement implanté sur l'un des circuits imprimés et s'étend vers l'autre en le traversant pour déboucher vers le capot dont il assure la sécurisation. Cela permet de détecter séparément et distinctement l'ouverture du capot supérieur de l'ouverture du capot inférieur et ainsi de renforcer la détection de l'ouverture du boitier, quel que soit l'origine de l'intrusion.

Selon une caractéristique particulière, le module de sécurité comprend deux éléments de sécurité supérieurs pour détecter l'ouverture du capot supérieur et deux éléments de sécurité inférieurs pour détecter l'ouverture du capot inférieur.

Ainsi, selon ce mode de réalisation, il est prévu deux éléments de sécurité pour détecter l'ouverture du capot supérieur et deux éléments de sécurité pour détecter l'ouverture du capot inférieur, renforçant encore la sécurisation du terminal de paiement électronique.

Selon une variante, ledit au moins un élément de sécurité débouche par la lumière du premier ou deuxième circuit imprimé et dépasse de la surface extérieure du premier ou deuxième circuit imprimé pour entrer en contact avec ledit au moins un capot supérieur ou ledit au moins un capot inférieur lorsque le boitier est fermé.

Ainsi, selon cette variante de réalisation, l'élément de sécurité présente une taille supérieure à la hauteur de l'enceinte sécurisée et traverse donc le trou formé dans le circuit imprimé, au travers duquel il débouche. L'élément de sécurité dépasse ainsi de la surface extérieure de ce circuit imprimé pour pouvoir entrer en contact avec le capot supérieur ou le capot inférieur, afin de pouvoir en détecter l'ouverture. Un avantage de cette variante réside dans le fait que le contact peut être direct entre l'élément de sécurité et le capot dont il a pour fonction de détecter l'ouverture.

Selon une autre variante, ledit au moins un élément de sécurité est affleurant à la face intérieure du premier ou deuxième circuit imprimé et entre en contact avec ledit au moins un capot supérieur ou ledit au moins un capot inférieur lorsque le boitier est fermé, via au moins un élément de liaison engagé dans la lumière.

Ainsi, selon cette variante de réalisation, l'élément de sécurité présente une taille inférieure à la hauteur de l'enceinte sécurisée et ne traverse donc pas le trou formé dans le circuit imprimé. L'élément de sécurité ne dépasse ainsi pas de la surface extérieure de ce circuit imprimé et entre en contact avec le capot supérieur ou le capot inférieur via un élément de liaison prévu pour détecter l'ouverture.

Cette configuration permet en particulier d'utiliser des éléments de sécurité identiques pour la détection de l'ouverture de l'enceinte sécurisée elle-même et pour la détection de l'ouverture des capots du boitier du terminal de paiement électronique, facilitant ainsi l'assemblage du terminal de paiement électronique. En effet, tous les éléments de sécurité étant de taille identique, aucune identification préalable n'est nécessaire pour leur implantation dans l'enceinte sécurisée, contrairement à la variante précédente dans laquelle les éléments de sécurité de la présente technique sont plus grands que ceux destinés à l'enceinte sécurisée et doivent être identifiés précisément pour être implantés aux emplacements corrects.

Par exemple, ledit au moins un élément de sécurité est constitué de silicone et de carbone et/ou de silicone et d'une partie métallique.

La présente technique concerne également un terminal de paiement électronique comprenant au moins un module de sécurité tel que décrit précédemment.

La présente technique concerne également un procédé de détection d'une intrusion dans un terminal de paiement électronique comprenant au moins un module de sécurité tel que décrit précédemment, comprenant une étape de détection d'une intrusion lorsqu'au moins un contact entre un des éléments de sécurité et un des circuits de détection d'ouverture est ouvert.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1a****]** illustre une vue en perspective du dessus d'un module de sécurité, selon un mode de réalisation de l'invention ;
**[****Fig 1b****]** illustre une vue éclatée du dessus du module de sécurité de la figure 1a, selon un mode de réalisation de l'invention ;
**[****Fig 1c****]** illustre une vue en perspective et transparence du dessus du module de sécurité de la figure 1a, selon un mode de réalisation de l'invention ;
**[****Fig 1d****]** illustre une vue en perspective du dessus du module de sécurité de la figure 1a, intégré dans le capot inférieur d'un terminal de paiement électronique, selon une première variante de réalisation de l'invention ;
**[****Fig 1e****]** illustre la même vue que la figure 1d, avec le capot supérieur en transparence, selon une première variante de réalisation de l'invention ;
**[****Fig 1f****]** illustre un gros plan sur une partie de la figure 1e ;
**[****Fig 1g****]** illustre une vue en perspective du dessus du module de sécurité de la figure 1a, selon une deuxième variante de réalisation de l'invention ;
**[****Fig 1h****]** illustre un gros plan sur une partie de la figure 1g ;
**[****Fig 2a****]** illustre une vue en perspective du dessous d'un module de sécurité, selon un mode de réalisation de l'invention ;
**[****Fig 2b****]** illustre une vue éclatée du dessous du module de sécurité de la figure 2a, selon un mode de réalisation de l'invention ;
**[****Fig 2c****]** illustre une vue en perspective et transparence du dessous du module de sécurité de la figure 2a, selon un mode de réalisation de l'invention ;
**[****Fig 2d****]** illustre une vue en perspective du dessous du module de sécurité de la figure 2a, intégré dans le capot supérieur d'un terminal de paiement électronique, selon une première variante de réalisation de l'invention ;
**[****Fig 2e****]** illustre une vue en perspective du dessous du module de sécurité de la figure 2a, selon une deuxième variante de réalisation de l'invention.

### Description détaillée de modes de réalisation de l'invention

Le principe général de la technique proposée repose sur la mise en œuvre, dans une enceinte sécurisée (notée également module de sécurité) d'un dispositif électronique, d'éléments de sécurité destinés à la détection d'une intrusion dans le dispositif électronique, et plus précisément d'une ouverture du boitier du dispositif électronique.

La technique proposée permet à un système de sécurisation de type « fausse touche », de détecter, de manière plus sécurisée, les intrusions par un démontage du boîtier, en intégrant les éléments de sécurité formant une partie des « fausses touches » dans une enceinte elle-même sécurisée. La vulnérabilité de ces éléments de sécurité eux-mêmes est donc fortement diminuée.

De plus, selon un mode de réalisation, les éléments de sécurité destinés à détecter l'ouverture du boitier sont identiques à ceux utilisées pour détecter l'ouverture de l'enceinte sécurisée elle-même, de sorte à simplifier le montage de cette enceinte sécurisée et par là même du dispositif électronique.

On décrit par la suite un mode de réalisation dans lequel l'enceinte sécurisée se situe au niveau du lecteur de carte à puce d'un terminal de paiement électronique, protégeant notamment les composants sensibles servant à la lecture des données sensibles d'une carte à puce utilisée pour une transaction mise en œuvre par le terminal de paiement électronique.

La présente technique peut être mise en œuvre quel que soit l'emplacement de l'enceinte sécurisée dans le terminal de paiement électronique, en fonction des composants sensibles à protéger.

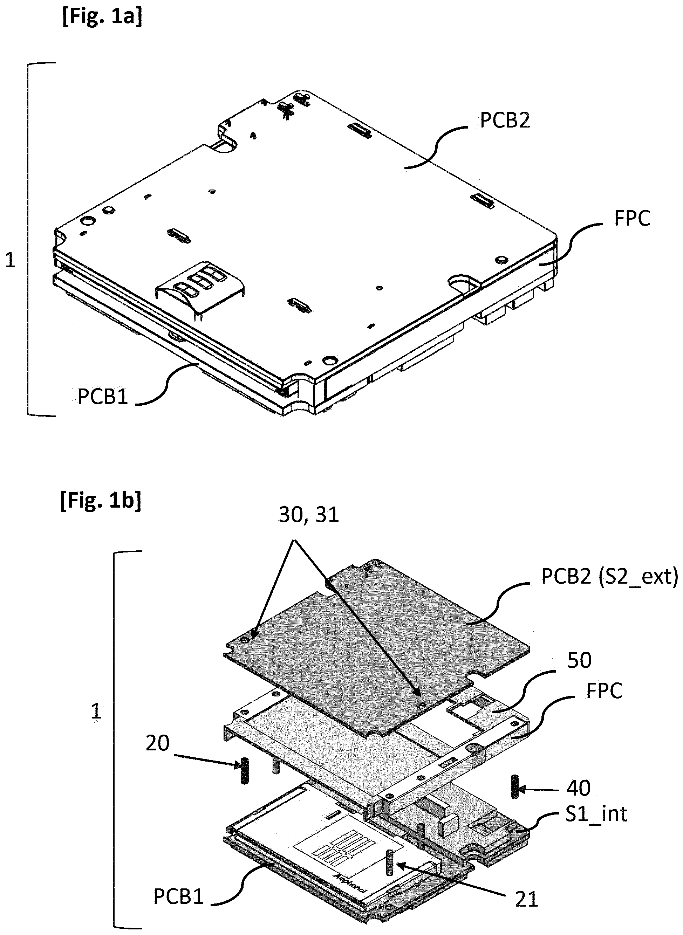

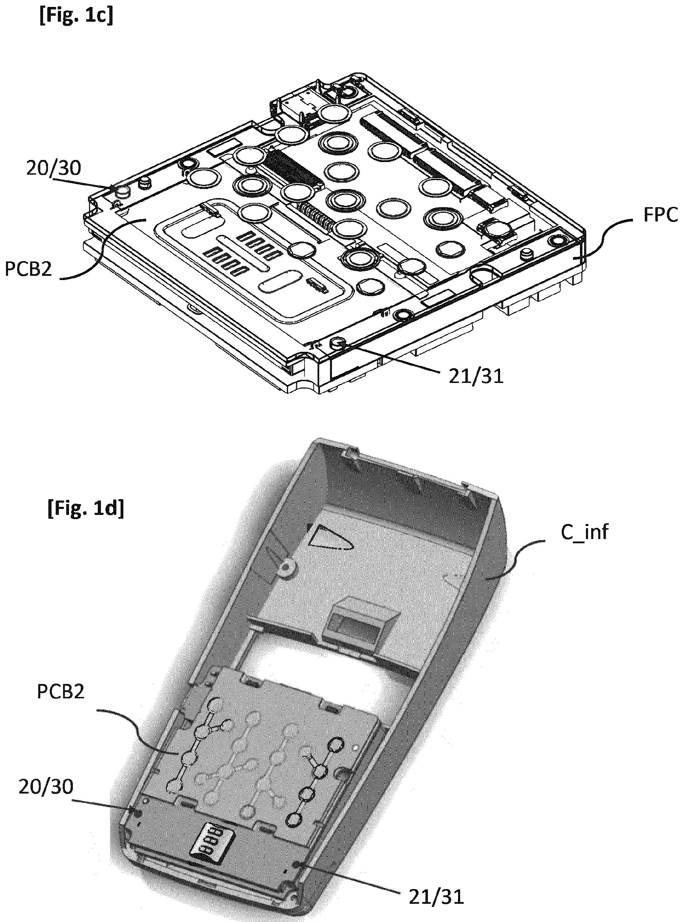

Comme illustré notamment en figures 1a (vue en perspective de dessus) et 2a (vue en perspective de dessous), une telle enceinte sécurisée 1 est par exemple formée de deux circuits imprimés PCB1, PCB2, positionnés en vis-à-vis et reliés par un circuit flexible FPC périphérique, ou semi-périphérique, permettant de protéger d'attaques externes les composants implantés sur les faces en vis-à-vis des circuits imprimés. Le circuit flexible FPC est par exemple collé sur une structure rigide intermédiaire 50 placée entre les deux circuits imprimés PCB1 et PCB2. Les composants implantés respectivement sur les faces intérieures (S1_int, S2_int) des circuits imprimés PCB1 et PCB2 sont donc protégés d'attaques extérieures telles que celles visant par exemple à intercepter les signaux échangés entre certains composants par l'introduction d'une sonde espionne. L'enceinte sécurisée 1 empêche en effet une telle intrusion.

De plus, une telle enceinte sécurisée 1 est elle-même protégée contre des attaques visant à séparer les deux circuits imprimés PCB1 et PCB2 de manière à accéder aux composants sensibles ou aux signaux qu'ils échangent. Pour ce faire, des éléments de sécurité 40 sont mis en œuvre au sein de l'enceinte sécurisée, visant à détecter une ouverture de cette enceinte, par écartement des deux circuits imprimés la formant. Par exemple, de tels éléments de sécurité se présentent sous la forme de cylindre en matière souple et déformable et parfois électriquement conductrice qui permet de mettre en contact, sur un circuit imprimé, un anneau externe et un anneau interne (principe connu d'une « fausse touche »). Lorsqu'une pression suffisante est exercée sur le cylindre (encore appelé « puck » en anglais, pour palet en français), le courant électrique passe entre l'anneau interne et l'anneau externe de la fausse touche. Quand le courant passe correctement dans cette fausse touche, le terminal s'auto diagnostique (via un ou plusieurs circuits de sécurité) comme étant dans un état de fonctionnement correct. Il se peut également que la matière du cylindre ne soit pas électriquement conductrice, auquel cas un dôme métallique est adjoint au puck afin de remplir la fonction de conduction de courant entre l'anneau externe et l'anneau interne de la fausse touche. La mise en œuvre d'un tel élément de sécurité peut également se faire, de manière connue, sous la forme d'une pastille carbone (« pad » en anglais).

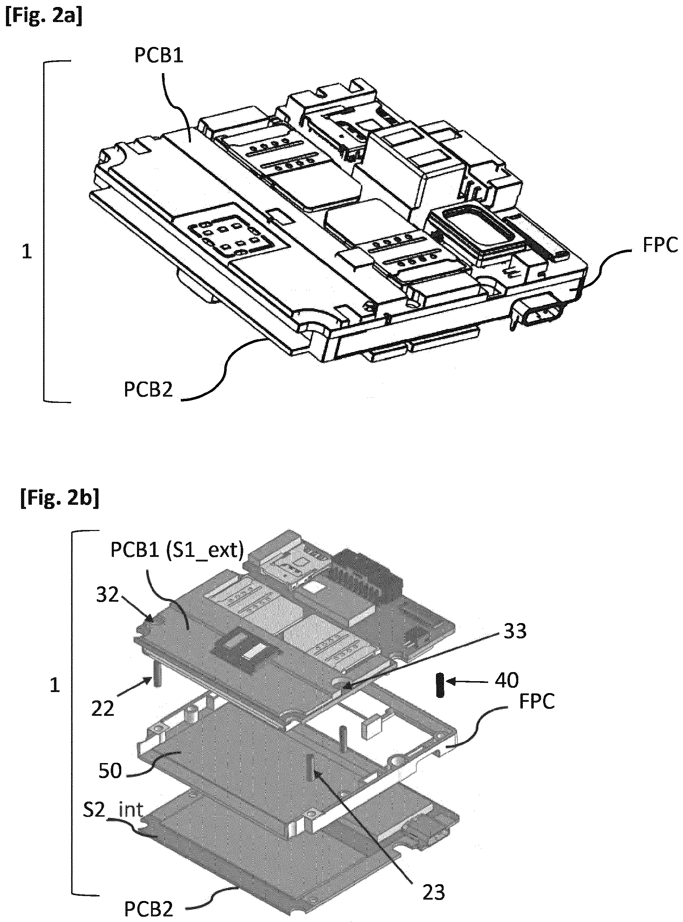

De tels éléments de sécurité sont par exemple identifiés avec la référence 40 sur les figures 1b et 2b, les anneaux internes et externes respectifs (non illustrés) formant la fausse touche se situant sur les faces intérieures S1_int, S2_int des circuits imprimés PCB1 et PCB2.

Le principe de la présente technique repose donc sur la mise en œuvre, dans une telle enceinte sécurisée, d'un ou plusieurs éléments de sécurité, du même type que ceux décrits précédemment, pour la détection de l'ouverture du boitier du terminal de paiement électronique dans laquelle l'enceinte est intégrée. Pour ce faire, le ou les éléments de sécurité doivent non seulement être reliés à un circuit de sécurité sur l'un ou l'autre des circuits imprimés PCB1, PCB2 pour générer une alerte lorsqu'une ouverture est détectée, mais également au boitier du terminal de paiement électronique lui-même lorsque ce dernier est fermé, via des lumières prévues dans ces circuits imprimés PCB1, PCB2, en regard des éléments de sécurité. Ainsi, la fermeture du boitier permet d'appliquer une pression sur ces éléments de sécurité et de fermer les circuits de sécurité associés, de sorte à ce que l'un ou plusieurs de ces circuits s'ouvrent lorsque la pression exercée sur l'un ou plusieurs de ces éléments de sécurité n'est plus suffisante, par exemple pour cause d'une tentative d'ouverture du boitier.

Pour une meilleure compréhension de la présente technique, le mode de réalisation décrit prévoit la mise en œuvre de deux éléments de sécurité, notés éléments de sécurité supérieurs 20 et 21, pour la détection de l'ouverture du capot supérieur du boitier du terminal de paiement électronique ainsi que deux éléments de sécurité, notés éléments de sécurité inférieurs 22 et 23, pour la détection de l'ouverture du capot inférieur du boitier du terminal de paiement électronique. Le nombre d'éléments de sécurité inférieurs/supérieurs mis en œuvre dépend du niveau de sécurité requis. Leurs emplacements sont avantageusement choisis afin de détecter le plus précisément possible toute tentative d'ouverture de l'un ou l'autre des capots supérieur et inférieur. Par exemple, pour des circuits imprimés de forme carrée, il est avantageux de disposer des éléments de sécurité aux quatre coins, de manière à détecter toute tentative de basculement qui serait possible avec un seul élément de sécurité placé au centre du circuit imprimé.

La figure 1b illustre donc une vue éclatée, en perspective, du dessus d'une enceinte sécurisée selon ce mode de réalisation de la présente technique. Cette vue du dessus permet notamment d'illustrer plus particulièrement les éléments de sécurité supérieurs 20 et 21, mis en œuvre entre les circuits imprimés PCB1 et PCB2. Leur rôle étant de détecter une ouverture du capot supérieur du terminal de paiement électronique, il est donc prévu deux lumières 30, 31 dans le circuit imprimé PCB2, dont la surface extérieure S2_ext est seule visible sur cette figure 1b. Ainsi, selon ce mode de réalisation, les éléments de sécurité 20 et 21 sont implantés sur la face interne S1_int du circuit imprimé PCB1 et s'étendent vers le circuit imprimé PCB2, respectivement en regard des lumières 30 et 31 prévues dans le circuit imprimé PCB2 lorsque l'enceinte sécurisée 1 est assemblée.

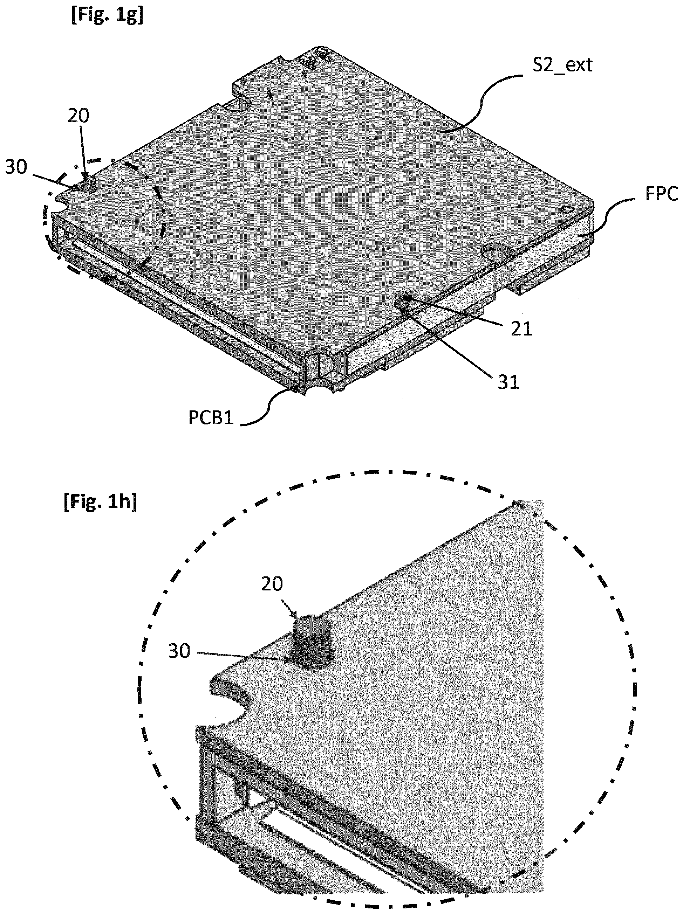

Les figures 1c à 1f et 1g à 1h illustrent une telle enceinte sécurisée assemblée et fermée, respectivement selon deux variantes de réalisation.

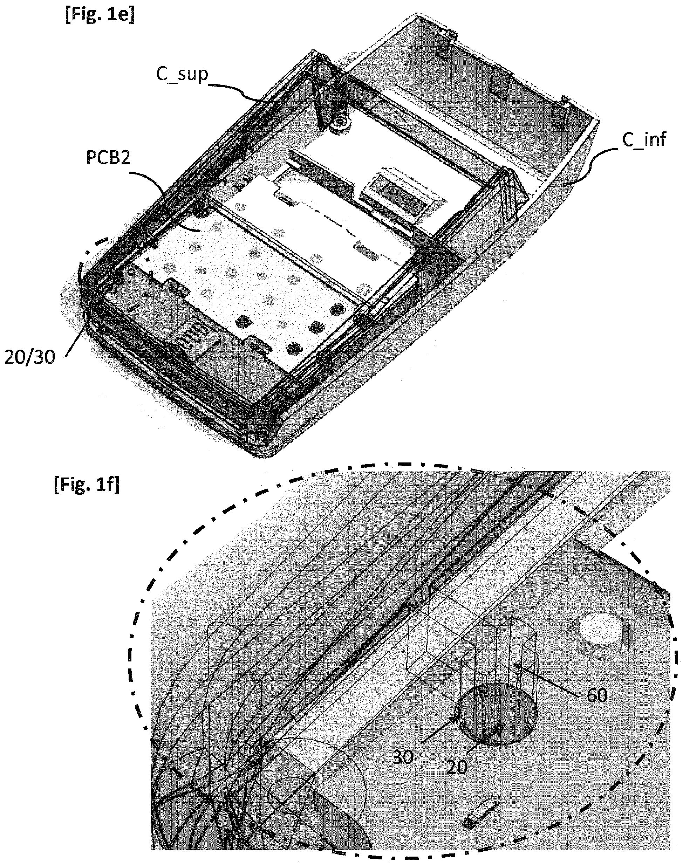

Selon la première variante illustrée en figures 1c à 1f, les éléments de sécurité supérieurs 20 et 21 ne dépassent pas de la surface extérieure du circuit imprimée PCB2. Cela est plus particulièrement visible sur le gros plan de la figure 1f (correspondant à la zone entourée en pointillés sur la figure 1e), au niveau de l'ensemble formé par l'élément de sécurité supérieur 20 et la lumière 30 correspondante. Dans une telle configuration, il est nécessaire de mettre en œuvre un élément de liaison entre le capot supérieur et l'élément de sécurité, afin que ce dernier puisse assurer sa fonction de détection de l'ouverture du capot supérieur. Sur les figures 1e et 1f, le capot supérieur C_sup est représenté en transparence, via des traits fins noirs, et l'élément de liaison 60 (servant à mettre en contact l'élément de sécurité 20 et le capot supérieur C_sup) est représenté également en filaire. Cet élément de liaison 60 se présente sous la forme d'une excroissance s'étendant vers le bas à partir de la surface intérieure du capot supérieur et s'engageant (s'insérant) dans la lumière 30 afin d'entrer en contact avec l'élément de sécurité supérieure 20, lorsque le boitier du terminal de paiement électronique est fermé par assemblage notamment des capots inférieur et supérieur. Cette mise en œuvre s'applique également pour le deuxième élément de sécurité supérieur 21 (non illustré sur la figure 1f).

Différentes formes peuvent être choisies pour l'élément de liaison, selon la forme du capot supérieur, la configuration interne de la partie du terminal de paiement électronique dans laquelle est intégrée l'enceinte sécurisée et la forme des éléments de sécurité supérieurs 20 et 21 et des lumières 30 et 31.

Cette première variante offre l'avantage de pouvoir utiliser des éléments de sécurité identiques pour la détection d'intrusion dans l'enceinte sécurisée 1 et pour la détection d'ouverture du boitier du terminal de paiement électronique selon la présente technique. Ainsi, les éléments 20, 21 et 40 par exemple, illustrés sur la figure 1b, sont de taille et de forme identiques, facilitant leur assemblage. Par exemple, pour une distance de 5mm entre les circuits imprimés PCB1 et PCB2, les éléments de sécurité peuvent mesurer de 5.75 mm lorsqu'ils ne sont pas contraints. Ceci permet d'effectuer les détections d'intrusion à la fois au sein de l'enceinte sécurisée et au sein du boitier.

Selon la deuxième variante illustrée en figures 1g et 1h, les éléments de sécurité supérieurs 20 et 21 dépassent de la surface extérieure S2_ext du circuit imprimée PCB2, à travers les lumières 30 et 31. Cela est plus particulièrement visible sur le gros plan de la figure 1h (correspondant à la zone entourée en pointillés sur la figure 1g), au niveau de l'ensemble formé par l'élément de sécurité supérieur 20 et la lumière 30 correspondante. Un avantage de cette configuration réside dans le fait qu'il n'est pas nécessaire de mettre en œuvre un élément de liaison entre le capot supérieur et l'élément de sécurité, afin que ce dernier puisse assurer sa fonction de détection de l'ouverture du capot supérieur, car il est possible de mettre en contact l'extrémité de l'élément de sécurité supérieur 20 directement avec la surface intérieure du capot supérieur, lorsque le boitier du terminal de paiement électronique est fermé par assemblage notamment des capots inférieur et supérieur.

On décrit maintenant la mise en œuvre des éléments de sécurité inférieurs. Ainsi, la figure 2b illustre une vue éclatée, en perspective, du dessous d'une enceinte sécurisée selon ce mode de réalisation de la présente technique. Cette vue du dessous permet notamment d'illustrer plus particulièrement les éléments de sécurité inférieurs 22 et 23, mis en œuvre entre les circuits imprimés PCB1 et PCB2. Leur rôle étant de détecter une ouverture du capot inférieur du terminal de paiement électronique, il est donc prévu deux lumières 32, 33 dans le circuit imprimé PCB1, dont la surface extérieure S1_ext est seule visible sur cette figure 2b. Ainsi, selon ce mode de réalisation, les éléments de sécurité 22 et 23 sont implantés sur la face interne S2_int du circuit imprimé PCB2 et s'étendent vers le circuit imprimé PCB1, respectivement en regard des lumières 32 et 33 prévues dans le circuit imprimé PCB1 lorsque l'enceinte sécurisée 1 est assemblée.

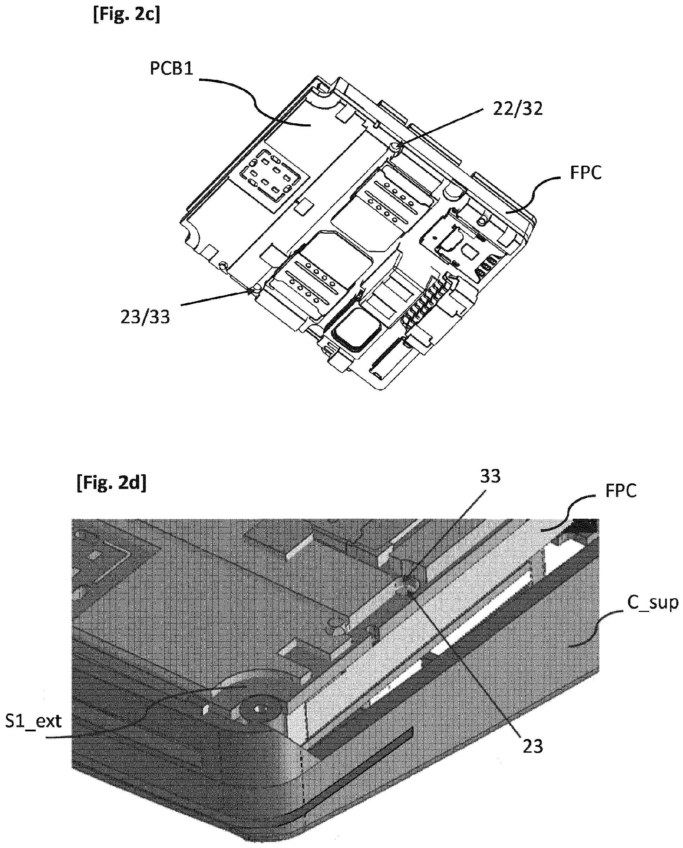

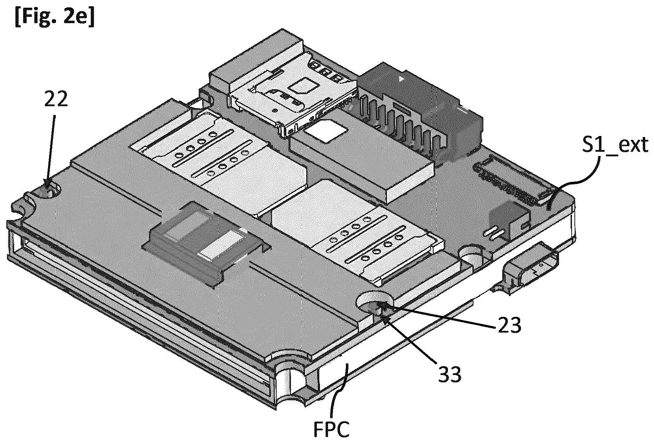

Les figures 2c à 2d et 2e illustrent une telle enceinte sécurisée assemblée et fermée, respectivement selon les première et deuxième variantes de réalisation des éléments de sécurité décrites ci-dessus pour les éléments de sécurité supérieurs 20 et 21.

Selon la première variante illustrée en figures 2c et 2d, les éléments de sécurité inférieurs 22 et 23 ne dépassent pas de la surface extérieure S1_ext du circuit imprimée PCB1. Dans une telle configuration, il est nécessaire de mettre en œuvre un élément de liaison entre le capot inférieur et l'élément de sécurité, afin que ce dernier puisse assurer sa fonction de détection de l'ouverture du capot inférieur. Cet élément de liaison n'est pas décrit ici plus en détails, ni illustré, car il présente toutes les caractéristiques déjà décrites ci-dessus en relation avec la détection de l'ouverture du capot supérieur. Rappelons toutefois que cette première variante offre l'avantage de pouvoir utiliser des éléments de sécurité identiques pour la détection d'intrusion dans l'enceinte 1 et pour la détection d'ouverture du boitier du terminal de paiement électronique. Ainsi, les éléments 22, 23 et 40 par exemple, illustrés sur la figure 2b, sont de taille et de forme identiques, facilitant leur assemblage.

Selon la deuxième variante illustrée en figure 2e, les éléments de sécurité inférieurs 22 et 23 dépassent de la surface extérieure S1_ext du circuit imprimée PCB1, à travers les lumières 32 et 33. Comme indiqué précédemment, un avantage de cette configuration réside dans le fait qu'il n'est pas nécessaire de mettre en œuvre un élément de liaison entre le capot inférieur et l'élément de sécurité, afin que ce dernier puisse assurer sa fonction de détection de l'ouverture du capot inférieur, car il est possible de mettre en contact l'extrémité de l'élément de sécurité inférieur 22 (23) directement avec la surface intérieure du capot inférieur, lorsque le boitier du terminal de paiement électronique est fermé par assemblage notamment des capots inférieur et supérieur.

Ainsi, la présente technique permet de renforcer la sécurisation d'un dispositif électronique, tel qu'un terminal de paiement électronique par exemple, en renforçant l'invulnérabilité des éléments de sécurité mis en œuvre pour détecter une ouverture du boitier du terminal de paiement électronique, par leur intégration dans une enceinte elle-même sécurisée intégrée au terminal de paiement électronique.

La présente technique concerne donc également un procédé de détection d'une intrusion par ouverture du boitier d'un terminal de paiement électronique dans lequel est mis en œuvre un module de sécurité, ou enceinte sécurisée, tel que décrit précédemment, et notamment un ou plusieurs éléments de sécurité inférieurs/supérieurs. Ce procédé de détection comprend donc une étape de détection d'une intrusion lorsqu'au moins un contact entre un des éléments de sécurité et un des circuits de détection d'ouverture est ouvert, sur le principe des fausses touches.

## Revendications

1. Module de sécurité (1) d'un terminal de paiement électronique comprenant un boitier formé par au moins un capot supérieur (C_sup) et un capot inférieur (C-inf), ledit module de sécurité (1) comprenant au moins un premier et un deuxième circuits imprimés (PCB1, PCB2) présentant chacun une face intérieure (S1_int, S2_int), lesdites faces intérieures étant situées en regard l'une de l'autre et sur lesquelles est implantée une pluralité de composants électroniques à sécuriser, et un circuit imprimé flexible (FPC) s'étendant dudit premier circuit imprimé audit deuxième circuit imprimé sur au moins une partie de leur périmètre et formant, avec lesdits premier et deuxième circuits imprimés, une enceinte sécurisée pour ladite pluralité de composants électroniques,
**caractérisé en ce que** ledit module de sécurité (1) comprend au moins un élément de sécurité (20, 21, 22, 23) s'étendant dudit premier circuit imprimé (PCB1) ou dudit deuxième circuit imprimé (PCB2), sur lequel il est relié à au moins un circuit de détection d'ouverture dudit boitier, vers ledit deuxième circuit imprimé (PCB2), respectivement ledit premier circuit imprimé (PCB1), en regard d'une lumière (30, 31, 32, 33) traversant ledit deuxième circuit imprimé (PCB2), respectivement ledit premier circuit imprimé (PCB1), via laquelle ledit au moins un élément de sécurité (20, 21, 22, 23) entre en contact avec ledit au moins un capot supérieur ou ledit au moins un capot inférieur lorsque ledit boitier est fermé, afin de détecter une ouverture de l'un ou l'autre des capots supérieur et inférieur.

2. Module de sécurité selon la revendication 1, **caractérisé en ce qu'**il comprend deux éléments de sécurité respectivement pour détecter l'ouverture du capot supérieur et l'ouverture du capot inférieur, lesdits deux éléments de sécurité étant noté élément de sécurité supérieur (20, 21) et élément de sécurité inférieur (22, 23), ledit élément de sécurité supérieur (20) s'étendant dudit premier circuit imprimé (PCB1), sur lequel il est relié à au moins un circuit de détection d'ouverture dudit boitier, vers ledit deuxième circuit imprimé (PCB2) en regard d'une lumière (30) traversant ledit deuxième circuit imprimé (PCB2) via laquelle ledit élément de sécurité supérieur (20) entre en contact avec ledit au moins un capot supérieur lorsque ledit boitier est fermé et ledit élément de sécurité inférieur (22) s'étendant dudit deuxième circuit imprimé (PCB2), sur lequel il est relié à au moins un circuit de détection d'ouverture dudit boitier, vers ledit premier circuit imprimé (PCB1) en regard d'une lumière (32) traversant ledit premier circuit imprimé (PCB1) via laquelle ledit élément de sécurité inférieur (22) entre en contact avec ledit au moins un capot inférieur lorsque ledit boitier est fermé.

3. Module de sécurité selon la revendication 1 ou 2, **caractérisé en ce qu'**il comprend deux éléments de sécurité supérieurs (20, 21) pour détecter l'ouverture du capot supérieur et deux éléments de sécurité inférieurs (22, 23) pour détecter l'ouverture du capot inférieur.

4. Module de sécurité selon l'une quelconque des revendications 1 à 3, caractérisé en ce ledit au moins un élément de sécurité (20, 21, 22, 23) débouche par ladite lumière (30, 31, 32, 33) dudit premier ou deuxième circuit imprimé (PCB1, PCB2) et dépasse de la surface extérieure (S1_ext, S2_ext) dudit premier ou deuxième circuit imprimé pour entrer en contact avec ledit au moins un capot supérieur ou ledit au moins un capot inférieur lorsque ledit boitier est fermé.

5. Module de sécurité selon l'une quelconque des revendications 1 à 3, caractérisé en ce ledit au moins un élément de sécurité (20, 21, 22, 23) est affleurant à ladite face intérieure (S1_int, S2_int) dudit premier ou deuxième circuit imprimé (PCB1, PCB2) et entre en contact avec ledit au moins un capot supérieur ou ledit au moins un capot inférieur lorsque ledit boitier est fermé, via au moins un élément de liaison (60) engagé dans ladite lumière (30, 21, 32, 33).

6. Module de sécurité selon l'une quelconque des revendications 1 à 5, **caractérisé en ce que** ledit au moins un élément de sécurité (20, 21, 22, 23) est constitué de silicone et de carbone et/ou de silicone et d'une partie métallique.

7. Terminal de paiement électronique comprenant au moins un module de sécurité selon l'une quelconque des revendications 1 à 6.

8. Procédé de détection d'une intrusion dans un terminal de paiement électronique selon la revendication 7, **caractérisé en ce qu'**il comprend une étape de détection d'une intrusion lorsqu'au moins un contact entre un desdits éléments de sécurité et un desdits circuits de détection d'ouverture est ouvert.

## Patentansprüche

1. Sicherheitsmodul (1) eines elektronischen Zahlungsterminals, das ein Gehäuse umfasst, das aus mindestens einer oberen Abdeckung (C_sup) und einer unteren Abdeckung (C-inf) gebildet ist, wobei das Sicherheitsmodul (1) mindestens eine erste und eine zweite Leiterplatte (PCB1, PCB2) umfasst, die jeweils eine Innenseite (S1_int, S2_int) aufweisen, wobei sich die Innenseiten gegenüberliegen und auf denen eine Vielzahl von zu sichernden elektronischen Komponenten installiert sind, und eine flexible Leiterplatte (FPC), die sich von der ersten Leiterplatte über mindestens einen Teil ihres Umfangs aus erstreckt und zusammen mit der ersten und zweiten Leiterplatte einen sicheren Raum für die Vielzahl von elektronischen Komponenten bildet,
**dadurch gekennzeichnet, dass** das Sicherheitsmodul (1) mindestens ein Sicherheitselement (20, 21, 22, 23) umfasst, das sich aus der ersten Leiterplatte (PCB1) oder der zweiten Leiterplatte (PCB2), an der es mit mindestens einer Schaltung zum Erkennen eines Öffnens des Gehäuses verbunden ist, zu der zweiten Leiterplatte (PCB2) bzw. zu der ersten Leiterplatte (PCB1) hin erstreckt, gegenüber einer Öffnung (30, 31, 32, 33), die die zweite Leiterplatte (PCB2) bzw. die erste Leiterplatte (PCB1) durchquert, über die das mindestens eine Sicherheitselement (20, 21, 22, 23) mit der mindestens einen oberen Abdeckung oder der mindestens einen unteren Abdeckung in Kontakt kommt, wenn das Gehäuse geschlossen ist, um ein Öffnen entweder der oberen oder der unteren Abdeckung zu erkennen.

2. Sicherheitsmodul nach Anspruch 1, **dadurch gekennzeichnet, dass** es jeweils zwei Sicherheitselemente zum Erkennen des Öffnens der oberen Abdeckung und des Öffnens der unteren Abdeckung umfasst, wobei die beiden Sicherheitselemente als oberes Sicherheitselement (20, 21) und unteres Sicherheitselement (22, 23) bezeichnet werden, wobei sich das obere Sicherheitselement (20) von der ersten Leiterplatte (PCB1) aus, an der es mit mindestens einer Schaltung zum Erkennen eines Öffnens des Gehäuses verbunden ist, zu der zweiten Leiterplatte (PCB2) gegenüber einer Öffnung (30) hin erstreckt, die die zweite Leiterplatte (PCB2) durchquert, über das das obere Sicherheitselement (20) mit der mindestens einen oberen Abdeckung in Kontakt kommt, wenn das Gehäuse geschlossen ist, und das untere Sicherheitselement (22) sich von der zweiten Leiterplatte (PCB2) aus, an der es mit mindestens einer Schaltung zum Erkennen eines Öffnens des Gehäuses verbunden ist, zu der ersten Leiterplatte (PCB1) gegenüber einer Öffnung (32) hin erstreckt, die die erste Leiterplatte (PCB1) durchquert, über das das untere Sicherheitselement (22) mit der mindestens einen unteren Abdeckung in Kontakt kommt, wenn das Gehäuse geschlossen ist.

3. Sicherheitsmodul nach Anspruch 1 oder 2, **dadurch gekennzeichnet, dass** es zwei obere Sicherheitselemente (20, 21) zum Erkennen des Öffnens der oberen Abdeckung und zwei untere Sicherheitselemente (22, 23) zum Erkennen des Öffnens der unteren Abdeckung umfasst.

4. Sicherheitsmodul nach einem der Ansprüche 1 bis 3, **dadurch gekennzeichnet, dass** das mindestens eine Sicherheitselement (20, 21, 22, 23) durch die Öffnung (30, 31, 32, 33) der ersten oder zweiten Leiterplatte (PCB1, PCB2) mündet und über die Außenfläche (S1_ext, S2_ext) der ersten oder zweiten Leiterplatte hinausragt, um mit der mindestens einen oberen Abdeckung oder der mindestens einen unteren Abdeckung in Kontakt zu kommen, wenn das Gehäuse geschlossen ist.

5. Sicherheitsmodul nach einem der Ansprüche 1 bis 3, **dadurch gekennzeichnet, dass** mindestens ein Sicherheitselement (20, 21, 22, 23) bündig mit der Innenseite (S1_int, S2_int) der ersten oder zweiten Leiterplatte (PCB1, PCB2) ist und über mindestens ein Verbindungselement (60), das in die Öffnung (30, 21, 32, 33) eingreift, mit der mindestens einen oberen Abdeckung oder der mindestens einen unteren Abdeckung in Kontakt kommt, wenn das Gehäuse geschlossen ist.

6. Sicherheitsmodul nach einem der Ansprüche 1 bis 5, **dadurch gekennzeichnet, dass** das mindestens eine Sicherheitselement (20, 21, 22, 23) aus Silikon und Kohlenstoff und/oder aus Silikon und einem Metallteil besteht.

7. Elektronisches Zahlungsterminal, das mindestens ein Sicherheitsmodul nach einem der Ansprüche 1 bis 6 umfasst.

8. Verfahren zur Erkennung eines Eindringens in ein elektronisches Zahlungsterminal nach Anspruch 7, **dadurch gekennzeichnet, dass** es einen Schritt des Erkennens eines Eindringens umfasst, wenn mindestens ein Kontakt zwischen einem der Sicherheitselemente und einem der Schaltungen zum Erkennen eines Öffnens besteht.

## Claims

1. A security module (1) of an electronic payment terminal comprising a housing formed by at least one upper cover (C_sup) and one lower cover (C_inf), said security module (1) comprising at least first and second printed circuit boards (PCB1, PCB2) each having an inner face (S1_int, S2_int), said inner faces facing one another and on which a plurality of electronic components to be secured is installed, and a flexible printed circuit (FPC) extending from said first printed circuit board to said second printed circuit board over at least part of their perimeter and forming, with said first and second printed circuit boards, a secure enclosure for said plurality of electronic components,
**characterized in that** said security module (1) comprises at least one security element (20, 21, 22, 23) extending from said first printed circuit board (PCB1) or said second printed circuit board (PCB2), on which it is connected to at least one circuit for detecting opening of said housing, toward said second printed circuit board (PCB2), respectively said first printed circuit board (PCB1), facing a slot (30, 31, 32, 33) passing through said second printed circuit board (PCB2), respectively said first printed circuit board (PCB1), via which said at least one security element (20, 21, 22, 23) comes into contact with said at least one upper cover or said at least one lower cover when said housing is closed, in order to detect the opening of either the upper or lower cover.

2. The security module according to claim 1, **characterized in that** it comprises two security elements respectively for detecting the opening of the upper cover and the opening of the lower cover, said two security elements being denoted upper security element (20, 21) and lower security element (22, 23), said upper security element (20) extending from said first printed circuit board (PCB1), on which it is connected to at least one circuit for detecting opening of said housing, toward said second printed circuit board (PCB2), facing a slot (30) passing through said second printed circuit board (PCB2) via which said upper security element (20) comes into contact with said at least one upper cover when said housing is closed, and said lower security element (22) extending from said second printed circuit board (PCB2), on which it is connected to at least one circuit for detecting opening of said housing, toward said first printed circuit board (PCB1), facing a slot (32) passing through said first printed circuit board (PCB1) via which said lower security element (22) comes into contact with said at least one lower cover when said housing is closed.

3. The security module according to claim 1 or 2, **characterized in that** it comprises two upper security elements (20, 21) for detecting the opening of the upper cover and two lower security elements (22, 23) for detecting the opening of the lower cover.

4. The security module according to any one of claims 1 to 3, **characterized in that** said at least one security element (20, 21, 22, 23) opens through said slot (30, 31, 32, 33) of said first or second printed circuit board (PCB1, PCB2) and protrudes from the outer surface (S1_ext, S2_ext) of said first or second printed circuit board to come into contact with said at least one upper cover or said at least one lower cover when said housing is closed.

5. The security module according to any one of claims 1 to 3, **characterized in that** said at least one security element (20, 21, 22, 23) is flush with said inner face (S1_int, S2_int) of said first or second printed circuit board (PCB1, PCB2) and comes into contact with said at least one upper cover or said at least one lower cover when said housing is closed, via at least one connecting element (60) engaged in said slot (30, 21, 32, 33).

6. The security module according to any one of claims 1 to 5, **characterized in that** said at least one security element (20, 21, 22, 23) is made of silicone and carbon and/or silicone and a metal part.

7. An electronic payment terminal comprising at least one security module according to any one of claims 1 to 6.

8. A method for detecting an intrusion into an electronic payment terminal according to claim 7, **characterized in that** it comprises a step of detecting an intrusion when at least one contact between one of said security elements and one of said opening detection circuits is open.
